# EUROPEAN PATENT APPLICATION

(11) **EP 4 566 748 A1**
(43) Date of publication of application: **11.06.2025**
(21) Application number: 23848909.0
(22) Date of filing: 12.04.2023
(51) Int. Cl.: B23K 26/70, B23K 26/362

(54) **LASER MACHINING QUALITY MONITORING METHOD AND MONITORING ASSEMBLY, AND MACHINING DEVICE AND STORAGE MEDIUM**

(30) Priority: 02.08.2022 CN 202210921395
(71) Applicant: Han's Laser Technology Industry Group Co., Ltd., Shenzhen, Guangdong 518057 (CN)
(72) Inventor: YIN, Bobo, Shenzhen, Guangdong 518000 (CN); XU, Qijian, Shenzhen, Guangdong 518000 (CN); WANG, Miao, Shenzhen, Guangdong 518000 (CN); GAO, Yunfeng, Shenzhen, Guangdong 518000 (CN)
(74) Representative: J A Kemp LLP
(86) International application number: PCT/CN2023/087864
(87) International publication number: WO 2024/027198

(57) **Abstract**

A laser machining quality monitoring method, comprising the steps of: during the execution of the current laser machining process, sequentially measuring the light intensity of each beam of laser pulse reflected light on a product machining surface; sequentially comparing the light intensity of each beam of laser pulse reflected light with a preset light intensity, and determining whether the light intensity of the corresponding laser pulse reflected light is up to standard; counting the number of laser pulses up to standard; and determining whether the number of laser pulses up to standard is within a preset range. By means of the method, the real-time machining effect of a laser machining device is automatically monitored by means of a control system, thereby reducing the labor cost, and improving the automatic productivity of the device. The present invention further relates to a laser machining quality monitoring assembly, a laser machining device and a computer-readable storage medium.

## Description

### TECHNICAL FIELD

The present disclosure relates to the technical field of laser processing, and more particularly, to a method and device for monitoring laser processing quality, a processing apparatus, and a storage medium.

### BACKGROUND

Various laser processing apparatuses, such as laser marking machines, may often suffer from missing graphics or unqualified marking effect due to software bugs or hardware failures in their components during the marking process. In serious cases, the marked materials may even be scrapped, resulting in corresponding losses. Currently, in order to ensure that products marked with the laser marking machine meet the required quality standards, the laser marking machine needs to be guarded by an operator when it is in operation. The pass rate of each product is manually detected. However, the manual detection step not only increases the marking cost of the product but also affects the automatic productivity of the product.

### SUMMARY

**In** view of the above disadvantages of the conventional art, the present disclosure provides a method and device for monitoring laser processing quality, a processing apparatus, and a storage medium, which can realize automatic monitoring of the laser processing quality and improve the yield of the laser processing.

The following technical solutions have been adopted in this embodiment.

A method for monitoring laser processing quality is provided. The method is applied to a pulsed laser and includes:
detecting, when a present laser processing process is executed, a luminous intensity of reflected light of each laser pulse on a processed surface of a product sequentially;
comparing the luminous intensity of the reflected light of each laser pulse with a preset luminous intensity sequentially, and determining whether the luminous intensity of the reflected light of a corresponding laser pulse reaches a standard;
counting the number of laser pulses reaching the standard;
determining whether the number of the laser pulses reaching the standard is within a preset range;
confirming, if the number of the laser pulses reaching the standard is within the preset range, that processing quality of the present laser processing process is qualified; and
confirming, if the number of laser pulses reaching the standard is not within the preset range, that the processing quality of the present laser processing process is unqualified.

Further, in the method, detecting, when the present laser processing process is executed, the luminous intensity of the reflected light of each laser pulse on the processed surface of the product sequentially includes:
acquiring an optical signal of the reflected light of each laser pulse on the processed surface of the product sequentially, and converting the optical signal into a voltage signal.

Further, in the method, comparing the luminous intensity of the reflected light of each laser pulse with the preset luminous intensity sequentially, and determining whether the luminous intensity of the reflected light of the corresponding laser pulse reaches the standard includes:
comparing a value of the converted voltage signal with a preset voltage signal value, and generating a counting signal when the value of the converted voltage signal is greater than the preset voltage signal value.

Further, in the method, counting the number of laser pulses reaching the standard includes:
counting the number of laser pulses reaching the standard based on the number of the generated counting signals.

Further, after confirming that the processing quality of the present laser processing process is unqualified, the method includes:
turning off the pulsed laser, and generating an alarm signal.

Further, after confirming that the processing quality of the present laser processing process is qualified, the method includes:
proceeding to a next laser processing process automatically.

Further, before detecting, when the present laser processing process is executed, the luminous intensity of the reflected light of each laser pulse on the processed surface of the product sequentially, the method includes:
resetting the number of the laser pulses reaching the standard counted in a previous processing process to zero.

A device for monitoring laser processing quality is provided. The device is applied to a pulsed laser, and includes:
a detection module configured to detect a luminous intensity of reflected light of each laser pulse on a processed surface of a product sequentially;
a comparison module configured to compare the luminous intensity of the reflected light of each laser pulse with a preset luminous intensity sequentially, and determine whether the luminous intensity of the reflected light of a corresponding laser pulse reaches a standard;
a counting module configured to count the number of laser pulses reaching the standard; and
a determination module configured to: determine whether the number of the laser pulses reaching the standard is within a preset range; confirm, if the number of the laser pulses reaching the standard is within the preset range, that processing quality of the present laser processing process is qualified; and confirm, if the number of laser pulses reaching the standard is not within the preset range, that the processing quality of the present laser processing process is unqualified.

A laser processing apparatus is provided. The laser processing apparatus includes a processor, and a memory having a computer program stored therein. When the computer program is executed by the processor, the processor is caused to implement the method.

A computer-readable storage medium is provided. The computer-readable storage medium has computer-executable instructions stored therein. The computer-executable instructions are configured to execute the method.

Comparing with the conventional art, the method and device for monitoring laser processing quality, the processing apparatus and the storage medium provided in the present disclosure can determine whether the processing of each laser pulse is qualified by detecting the luminous intensity of the reflected light of each laser pulse, and then monitor the overall processing quality of the present laser processing process. Meanwhile, the monitoring step can be performed without manual participation, and the real-time processing effect of the laser processing apparatus can be automatically monitored with the help of the control system, thus achieving the purpose of reducing the labor cost and improving the automation productivity of the apparatus.

### BRIEF DESCRIPTION OF THE DRAWINGS

FIG. 1 is a flow diagram illustrating a method for monitoring laser processing quality provided in the present disclosure.
FIG. 2 is a structural block diagram illustrating a device for monitoring laser processing quality provided in the present disclosure and a pulsed laser.
FIG. 3 is a structural block diagram illustrating a laser processing apparatus provided in the present disclosure.

### DETAILED DESCRIPTION OF THE EMBODIMENTS

In order to make purposes, technical solutions and effects of the present disclosure clearer and more explicit, the present disclosure is described in further detail below with reference to the embodiments in accompanying with the appending drawings. It should be understood that the specific embodiments described herein are merely for explaining the present disclosure, but not intended to limit the present disclosure. Without further description, elements, structures and features in one embodiment may also be beneficially incorporated into other embodiments.

The present disclosure provides a method for monitoring laser processing quality, which is applied to a pulsed laser. The pulsed laser is a laser whose pulse width is less than 0.25 seconds and which works once every certain time interval. The pulsed laser has a large output power, and can accurately control the output of each pulse point. Therefore, the pulsed laser can be used in fine laser processing scenarios, such as laser marking, cutting, ranging, and rust removal.

Taking a pulsed laser marking machine with the pulsed laser as an example, the pulsed laser marking machine includes an industrial control machine, a laser scanning head, a marking board, and the pulsed laser. In order to accomplish the marking task, each module of the pulsed laser marking machine must cooperate closely, which has strict requirements on the technology and the working environment. Therefore, the pulsed laser marking machine may often suffers from missing graphics or unqualified marking effect due to software bugs or hardware failures in its components during the marking process. In serious cases, the marked materials may even be scrapped, resulting in corresponding losses.

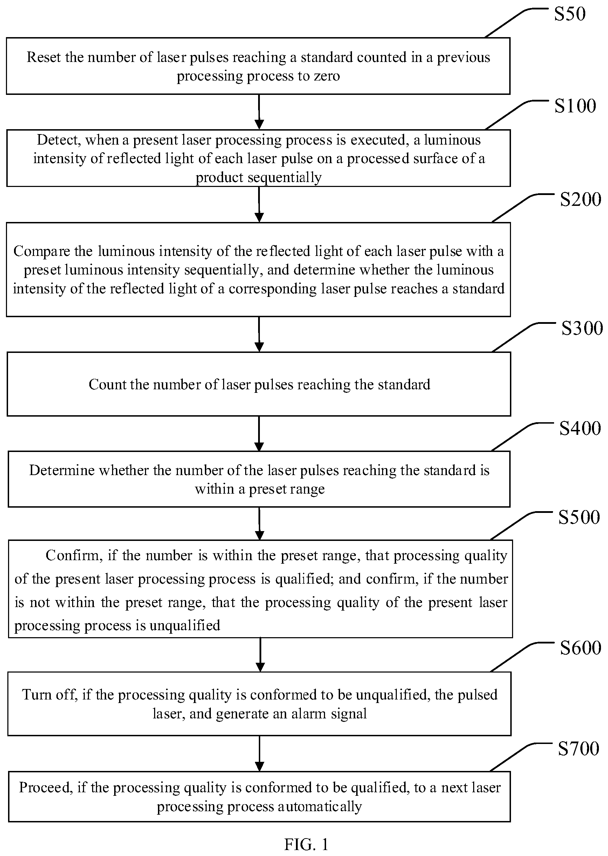

The present disclosure provides a method for monitoring laser processing quality for automatically monitoring the effect of laser processing and confirming whether the present laser processed product meets the qualified quality requirements. Refer to FIG. 1, the method includes the following steps:
in step S100, detecting, when a present laser processing process is executed, a luminous intensity of reflected light of each laser pulse on a processed surface of a product sequentially;
in step S200, comparing the luminous intensity of the reflected light of each laser pulse with a preset luminous intensity sequentially, and determining whether the luminous intensity of the reflected light of a corresponding laser pulse reaches a standard;
in step S300, counting the number of laser pulses reaching the standard;
in step S400, determining whether the number of the laser pulses reaching the standard is within a preset range;
in step S500, confirming, if the number of the laser pulses reaching the standard is within the preset range, that processing quality of the present laser processing process is qualified; and confirming, if the number of laser pulses reaching the standard is not within the preset range, that the processing quality of the present laser processing process is unqualified.

When the above monitoring steps are performed, the normal laser processing process is not affected. That is, on the basis of performing the original laser processing steps of the pulsed laser marking machine, it is possible for the pulsed laser marking machine to simultaneously detect the luminous intensity of the reflected light of the laser pulse on the processed surface of the product. In addition, a normal luminous intensity threshold for the reflected light of the laser pulse, i.e., a preset luminous intensity, can be set or calculated in advance. And then the luminous intensity of the reflected light of each laser pulse is compared with the preset luminous intensity to determine whether the present pulse is qualified or not.

Meanwhile, the range of the number of normal pulses generated by the pulsed laser when the processed product is qualified during the present laser processing process, i.e., a preset range, can be set or calculated in advance. And then, the number of qualified pulses is compared with the preset range to confirm that the number of qualified pulses is within the preset range. If the number of qualified pulses is not within the preset range, it means that the quality of this laser processing is unqualified.

Therefore, it can determine whether the processing of each laser pulse is qualified by detecting the luminous intensity of the reflected light of each laser pulse, and then monitor the overall processing quality of the present laser processing process. Meanwhile, the monitoring step can be performed without manual participation, and the real-time processing effect of the laser processing apparatus can be automatically monitored with the help of the control system, thus achieving the purpose of reducing the labor cost and improving the automation productivity of the apparatus.

In some embodiments, the step S100 includes:
acquiring an optical signal of the reflected light of each laser pulse on the processed surface of the product sequentially, and converting the optical signal into a voltage signal.

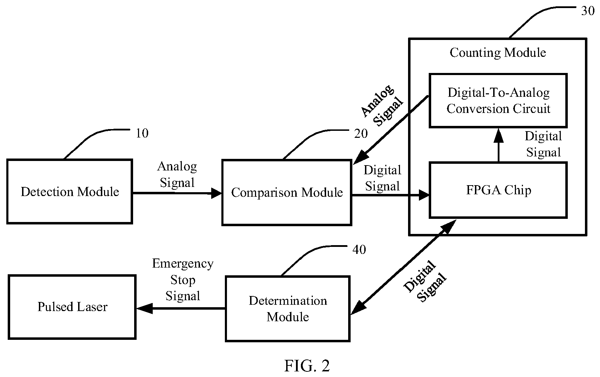

In actual processing, referring to FIG. 2, a detection module 10, such as a photoelectric probe or a photoelectric sensor, for detecting the optical signal can be provided in the laser processing apparatus. The optical signal of the reflected light of the laser pulse can be converted into a corresponding voltage signal by means of the detection module 10, thereby realizing the detection of the luminous intensity of the reflected light of each laser pulse.

Taking the installation of the photoelectric probe into the pulsed laser marking machine as an example, in the process of setting up the detection module 10, it is first necessary to select an appropriate type of photoelectric probe. The photoelectric probe detects the intensity of light by using a built-in photodiode to receive irradiation of the light and generate a current. The detection sensitivity of different photodiodes to light of different wavelengths is different. Therefore, the pulse lasers of different wavelengths need to be matched with an appropriate type of photoelectric probe, so as to accurately detect the intensity of the reflected light.

Secondly, for the selection of the installation position of the photoelectric probe, it is first necessary not to affect the normal marking work, and meanwhile, it can also make the photoelectric probe detect the optical pulse waveform on a condition that the pulsed laser outputs at a low power. For example, the photoelectric probe can be fixed on the laser scanning head. The photoelectric probe can also be fixed at an appropriate position on the marking platform by providing a bracket to fix the photoelectric probe.

In some embodiments, the step S200 includes:
comparing a value of the converted voltage signal with a preset voltage signal value, and generating a counting signal when the value of the converted voltage signal is greater than the preset voltage signal value.

The preset voltage signal value is generally the lowest voltage value of the voltage signal converted from the reflected light of the normal laser pulse detected by the photoelectric probe. In actual processing, referring to FIG. 2, a comparison module 20, such as a comparator or a comparison circuit, can be provided in the laser processing apparatus. The comparison module 20 compares the value of the converted voltage signal with the preset voltage signal value to determine whether the value of the converted voltage signal exceeds the preset voltage signal value, and generates a counting signal once the value of the converted voltage signal exceeding the preset voltage signal value.

In some embodiments, the step S200 includes:
counting the number of laser pulses reaching the standard based on the number of the generated counting signals.

In actual processing, referring to FIG. 2, a counting module 30 can be provided in the laser processing apparatus. The counting module 30 is connected to the comparison module 20, and the counting module 30 can receive the counting signal sent by the comparison module 20 and count. When the comparison module 20 generates the counting signal once, the counting module 30 increases the number of the laser pulses reaching the standard once.

Specifically, the counting module 30 may be implemented using an FPGA control chip in combination with a digital-to-analog conversion circuit. The model of the FPGA control chip may be LatticeXP2, or other models with similar functions.

During counting, the FPGA control chip is connected to a negative terminal of the comparator through the digital-to-analog conversion circuit, and a preset voltage signal value is input as a reference for comparison by the comparator. The voltage signal converted by the photoelectric probe is input through a positive terminal of the comparator, and when the peak value of the Gaussian waveform of this voltage signal is higher than the set voltage at the negative terminal of the comparator, an output terminal of the comparator outputs a high level to the FPGA control chip. The FPGA control chip receives the high level and performs a count once.

Of course, the counting module 30 may also use a DSP chip with a model of TMS320VC5509A, or other models but having a similar function. The counting module 30 may also use an MCU chip with a model of stm32f4, or other models but having a similar function. The counting module 30 may also use a DAC chip with a model of TLV5608, or other models but having a similar function. The present disclosure is not limited thereto.

In some embodiments, the step S400 may be implemented by the determination module 40. The determination module 40 can realize its function, i.e., acquiring the number of the laser pulses reaching the standard and determining whether the number of the laser pulses reaching the standard is within the preset range, directly by means of the original industrial control machine of the laser processing apparatus.

Specifically, the counting module 30 is communicatively connected to the industrial control machine through a serial port or other means. During laser processing, the laser processing software first estimates the range of the number of the normal laser pulses for this laser process. After the laser processing is completed, the laser processing software reads the number counted by the counting module 30, and determines whether the number counted by the counting module 30 is within the normal range, thereby determining whether the quality of this laser processing is qualified.

In some embodiments, after executing step S500 to confirm the processing quality, the method also includes:
in step S600, turning off, if the processing quality is confirmed to be unqualified, the pulsed laser, and generating an alarm signal.

If the number counted by the counting module 30 is not within the qualified range, the industrial control machine will turn off the pulsed laser, stop the marking process and generate the alarm signal. Then a site operator can be notified by an alarm lamp which receives the alarm signal alarm, or a display screen which receives the alarm signal and displays the alarm signal in the operation interface, or in other ways. The laser processing is restarted after the site operator has dealt with the fault or reset the laser processing parameters.

And, after executing the step S500, the method also includes:
in step S700, proceeding, if the processing quality is confirmed to be qualified, to a next laser processing process automatically.

After confirming that the processing quality of the present laser processing process is qualified, the next laser processing process is automatically started, and the next processing quality monitoring step is started to realize uninterrupted processing, improve processing efficiency, and ensure processing quality.

In some embodiments, after the step S700 or before the step S100, the method also includes:
in step S50, resetting the number of the laser pulses reaching the standard counted in a previous processing process to zero.

Specifically, before each laser processing process, the laser processing software in the industrial control machine clears the number counted by the counting module 30, so as to prevent the stored count from interfering with the monitoring of the present laser processing quality and improve the accuracy of the monitoring.

Referring to FIG. 2, The present disclosure provides a device for monitoring laser processing quality. The device is applied to a pulsed laser. The device includes:
a detection module 10 configured to detect a luminous intensity of reflected light of each laser pulse on a processed surface of a product sequentially;
a comparison module 20 configured to compare the luminous intensity of the reflected light of each laser pulse with a preset luminous intensity sequentially, and determine whether the luminous intensity of the reflected light of a corresponding laser pulse reaches a standard;
a counting module 30 configured to count the number of laser pulses reaching the standard; and
a determination module 40 configured to: determine whether the number of the laser pulses reaching the standard is within a preset range; confirm, if the number of the laser pulses reaching the standard is within the preset range, that processing quality of the present laser processing process is qualified; and confirm, if the number of laser pulses reaching the standard is not within the preset range, that the processing quality of the present laser processing process is unqualified.

In some embodiments, the detection module 10 may be implemented by a device such as a photoelectric probe or a photoelectric sensor. The optical signal of the reflected light of the laser pulse can be converted into a corresponding voltage signal by means of the detection module 10, thereby realizing the detection of the luminous intensity of the reflected light of each laser pulse.

The comparison module 20 may be implemented by a device such as a comparator or a comparison circuit. The comparison module 20 compares the value of the converted voltage signal with the preset voltage signal value to determine whether the value of the converted voltage signal exceeds the preset voltage signal value, and generates a counting signal once the value of the converted voltage signal exceeding the preset voltage signal value.

The counting module 30 may be implemented using an FPGA control chip in combination with a digital-to-analog conversion circuit, or other control chip with similar functions. During counting, the FPGA control chip is connected to a negative terminal of the comparator through the digital-to-analog conversion circuit, and a preset voltage signal value is input as a reference for comparison by the comparator. The voltage signal converted by the photoelectric probe is input through a positive terminal of the comparator, and when the peak value of the Gaussian waveform of this voltage signal is higher than the set voltage at the negative terminal of the comparator, an output terminal of the comparator outputs a high level to the FPGA control chip. The FPGA control chip receives the high level and performs a count once.

The determination module 40 may realize its function by means of the original industrial control machine of the laser processing apparatus. The industrial control machine is communicatively connected to the counting module 30 through a serial port or other means. During laser processing, the laser processing software first estimates the range of the number of the normal laser pulses for this laser process. After the laser processing is completed, the laser processing software reads the number counted by the counting module 30, and determines whether the number counted by the counting module 30 is within the normal range, thereby determining whether the quality of this laser processing is qualified.

In some embodiments, the determination module 40 is further configured to turning off, if the processing quality is confirmed to be unqualified, the pulsed laser, and generating an alarm signal to notify the site operator. The laser processing is restarted after the site operator has dealt with the fault or reset the laser processing parameters.

And, the determination module 40 is further configured to proceed, if the processing quality is confirmed to be qualified, to a next laser processing process automatically, thus realizing uninterrupted processing. In addition, before each laser process, the determination module 40 is further configured to reset the number counted by the counting module 30 to zero, to ensure accurate calculation for the present processing process.

The present disclosure also provides a non-transitory computer-readable storage medium. The non-transitory computer-readable storage medium has computer-executable instructions stored therein. The computer-executable instructions is configured to execute a method for monitoring laser processing quality as described in the above embodiment.

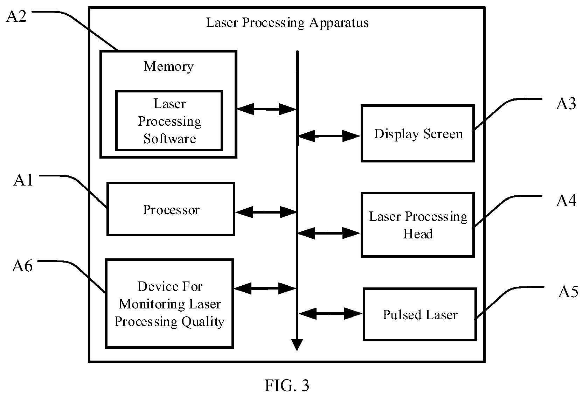

Referring to FIG.3, the present disclosure also provides a laser processing apparatus. The laser processing apparatus includes, at least one central processor A1 (taking one central processor A1 as an example in FIG.3), a memory A2, a display screen A3, a laser processing head A4, a pulsed laser A5, a device for monitoring laser processing quality A6, a bus and a communication interface.

The central processor A1, the memory A2, the display screen A3, the laser processing head A4, the pulsed laser A5, the device for monitoring laser processing quality A6, and the communication interface can be communicated with each other through the bus. The display screen A3 is configured to display a user operation interface preset in an initial setup mode, and the display screen A3 is further configured to display a process control window. The communication interface can transmit information. The central processor A1 can call logic instructions in the memory A2 to execute the method in the above embodiment by controlling the pulsed laser A5, the laser processing head A4, and the device for monitoring laser processing quality A6.

The central processor A1 may be a central processing unit (CPU), and the central processor A1 may also be other general-purpose processors, such as a digital signal processor (DSP), an application-specific integrated circuit (ASIC), a fieldprogrammable gate array (FPGA), or other programmable logic device, discrete gate, transistor logic device or discrete hardware component.

In addition, the logic instructions in the memory A2 may be stored in a computer-readable storage medium when implemented in the form of software function unit and sold or used as a separate workpiece.

The memory A2, as a computer-readable storage medium, may be configured to store a software program or a computer-executable program, such as program instructions or modules corresponding to the method in the embodiment of the present disclosure. The central processor A1 executes a functional application and data processing by executing the software program, instructions or modules stored in the memory A2, to implement the method in the above embodiment.

The memory A2 may include a program storage area and a data storage area. The program storage area may store an operating system, an application program required for at least one function. The data storage area may store data or the like created according to the use of the terminal device. In addition, the memory A2 may include a high-speed random access memory and may also include a non-volatile memory.

All or part of the steps of the above embodiments may be accomplished by hardware, or relevant hardware instructed by a program, The program may be stored in a computer-readable storage medium. The computer-readable storage medium may be a non-transitory storage medium including a USB flash disk, a removable hard disk, a read-only memory (ROM), a random access memory (RAM), a magnetic disk, an optical disk, or other media that can store the program code. The computer-readable storage medium may also be a transitory storage medium.

It can be understood that a person of ordinary skill in the art can make equivalent substitutions or changes according to the technical solution and inventive concept of the present disclosure, and all such modifications or substitutions shall fall within the protection scope of the claims appended to the present disclosure.

## Claims

1. A method for monitoring laser processing quality, the method being applied to a pulsed laser, and comprising:
detecting, when a present laser processing process is executed, a luminous intensity of reflected light of each laser pulse on a processed surface of a product sequentially;
comparing the luminous intensity of the reflected light of each laser pulse with a preset luminous intensity sequentially, and determining whether the luminous intensity of the reflected light of a corresponding laser pulse reaches a standard;
counting the number of laser pulses reaching the standard;
determining whether the number of the laser pulses reaching the standard is within a preset range;
confirming, if the number of the laser pulses reaching the standard is within the preset range, that processing quality of the present laser processing process is qualified; and
confirming, if the number of laser pulses reaching the standard is not within the preset range, that the processing quality of the present laser processing process is unqualified.

2. The method of claim 1, wherein detecting, when the present laser processing process is executed, the luminous intensity of the reflected light of each laser pulse on the processed surface of the product sequentially comprises:
acquiring an optical signal of the reflected light of each laser pulse on the processed surface of the product sequentially, and converting the optical signal into a voltage signal.

3. The method of claim 2, wherein comparing the luminous intensity of the reflected light of each laser pulse with the preset luminous intensity sequentially, and determining whether the luminous intensity of the reflected light of the corresponding laser pulse reaches the standard comprises:
comparing a value of the converted voltage signal with a preset voltage signal value, and generating a counting signal when the value of the converted voltage signal is greater than the preset voltage signal value.

4. The method of claim 1, wherein counting the number of laser pulses reaching the standard comprises:
counting the number of laser pulses reaching the standard based on the number of the generated counting signals.

5. The method of claim 1, wherein after confirming that the processing quality of the present laser processing process is unqualified, the method comprises:
turning off the pulsed laser, and generating an alarm signal.

6. The method of claim 1, wherein after confirming that the processing quality of the present laser processing process is qualified, the method comprises:
proceeding to a next laser processing process automatically.

7. The method of claim 1, wherein before detecting, when the present laser processing process is executed, the luminous intensity of the reflected light of each laser pulse on the processed surface of the product sequentially, the method comprises:
resetting the number of the laser pulses reaching the standard counted in a previous processing process to zero.

8. A device for monitoring laser processing quality, the device being applied to a pulsed laser, and comprising:
a detection module configured to detect a luminous intensity of reflected light of each laser pulse on a processed surface of a product sequentially;
a comparison module configured to compare the luminous intensity of the reflected light of each laser pulse with a preset luminous intensity sequentially, and determine whether the luminous intensity of the reflected light of a corresponding laser pulse reaches a standard;
a counting module configured to count the number of laser pulses reaching the standard; and
a determination module configured to: determine whether the number of the laser pulses reaching the standard is within a preset range; confirm, if the number of the laser pulses reaching the standard is within the preset range, that processing quality of the present laser processing process is qualified; and confirm, if the number of laser pulses reaching the standard is not within the preset range, that the processing quality of the present laser processing process is unqualified.

9. A laser processing apparatus comprising a processor, and a memory having a computer program stored therein, wherein when the computer program is executed by the processor, the processor is caused to implement the method of any one of claims 1 to 7.

10. A computer-readable storage medium having computer-executable instructions stored therein, wherein the computer-executable instructions are configured to execute the method of any one of claims 1 to 7.
